# EUROPEAN PATENT APPLICATION

(11) **EP 2 883 713 A1**
(43) Date of publication of application: **17.06.2015**
(21) Application number: 14170004.7
(22) Date of filing: 27.05.2014
(51) Int. Cl.: B60B 7/04, B60B 7/20

(54) **Non-rotating wheel cap**

(30) Priority: 12.12.2013 US 201314104081
(71) Applicant: Salah, Mazen Yousef Falah, 11180 Amman (JO)
(72) Inventor: Salah, Mazen Yousef Falah, 11180 Amman (JO)
(74) Representative: Stanners, David Ralph

(57) **Abstract**

The present invention relates to a non-rotating wheel cap which is inserted at the center of a wheel rim using fixtures; wherein such cap is used to display printed decorations; and wherein such decorations remain stationary in an upright position, while the rim is rotating. The preferred embodiment of the present invention comprises: a cylindrical body with a bottom wall, an upper edge, a lower edge and an opening, a plurality of fixtures extending from the lower edge of the cylindrical body, a small pin extending vertically from a central axis of the bottom wall; a roller bearing, wherein such bearing is press-fitted into a crescent-shaped object, wherein one of the lateral surfaces of such semi-circular object is engraved with small cylindrical holes. A cylindrical housing is attached to such object to which a concaved circular sheet is attached. The cap of the present invention is also simple in design, since it needs only one roller bearing and includes no bolts or adhesives.

## Description

### FIELD OF THE INVENTION

The present invention relates to a non-rotating decorative cap which can be fixed to a rotating body, and in particular, the present invention relates to a non-rotating decorative cap which can be fixed at the center of a vertically rotating member such as a vehicle's wheel; thereby showing a non-rotating state of a pattern, emblem or advertisement irrespective to the rotation of a rotating member.

### BACKGROUND OF THE INVENTION

Non-Rotating decorative caps are widely known as vehicles' accessories, which are used to display logos, emblems, or advertisements upon; wherein such caps use adhesives in order to be installed, and use transparent protective covers on the displayed item; wherein the transparent cover causes dust to be accumulated between the transparent cover and the displayed item; and wherein such caps vibrate at certain speeds causing the displayed item to vibrate, and thus become unreadable.

To overcome the rotation problem of regular decorative wheel caps which causes the logo, emblem, advertising or pattern of the caps to be unreadable during the motion of the vehicle, a new non-rotating wheel cap must be put in place with an engineered shape that prevents the caps from vibrating. The new cap must be light in weight, easier to install and more stable than those in the prior art, and does not use any protective covers to prevent the accumulation of dust in order for the logo to be readable all the time.

### SUMMARY OF THE INVENTION

Through the movement of a vehicle and during the rotation of the vehicle wheels, any decoration; whether it was a logo, an advertisement or an emblem imprinted on a regular wheel cap becomes impossible to be seen and identified clearly, and after the vehicle stops in a static position, the decoration rarely remains in its upright position and usually stops in a tilted manner, therefore, the main purpose of such cap is to exhibit certain decorative shapes clearly.

According to one aspect there is provided a non-rotating wheel cap device for displaying decorations at the center of a vehicle's wheel rim, the device comprising: a cylindrical body 1 having a central axis, a lower body edge and an upper body edge, the cylindrical body comprising an opening at the upper body edge, a bottom wall at the lower body edge, and inner body space between said bottom wall and said opening, a pin extending vertically from the bottom wall along the central axis outwardly toward the opening, a lip extending from the upper body edge radially outwardly from the central axis and having an upper lip portion and a lower lip portion, and mounting members located at said lower lip portion adapted to removably mount said cylindrical body on said vehicle's wheel rim; a roller bearing, said pin being adapted to be press-fitted inside said roller bearing; a curved crescent-shaped body having an upper and a lower lateral surfaces and, wherein the upper surface is concaved while the lower surface is flat. Said body 4 has a plurality of holes extending throughout the upper and lower lateral surfaces and of the body; a cylindrical housing having cylindrical wall and a concaved base with an upper surface and a lower surface , wherein the radius of said cylindrical wall is smaller than the radius of said concaved base, thus rendering the base to be extended radially outwardly from said cylindrical wall. Said cylindrical wall has a plurality of partitions that define a plurality of housing spaces for said crescent shaped body and said roller bearing respectively, and a plurality of empty spaces. The housing space for said crescent-shaped body comprises cylindrical members extending vertically downwardly from the lower cover surface, said cylindrical members being adapted to be press-fitted inside said cylindrical holes at the upper lateral surface of the crescent-shaped body. The curvature of said base is adapted to allow said upper surface of said body to be always in contact with the lower surface of said base; a concaved circular metal sheet having a plurality of protrusions, protruding radially from said concaved circular metal sheet.

Preferably, the cylindrical body and the cylindrical housing are made out of plastic, while the crescent-shaped body and said metal sheet are made out of metal. Preferably, the cylindrical holes are three holes. Preferably, the cylindrical housing is adapted to cover the opening of the cylindrical body. Preferably, the roller bearing and the crescent-shaped object are adapted to be enclosed inside the inner body space between the opening and the bottom wall.

Having discussed the main flaw in a regular wheel cap, the need for a non-rotating wheel cap that overcomes this flaw becomes apparent, but due to the limitations of acceptable prices paid for wheel caps and due to constructive and design-related issues, the mechanism that keeps the decoration in its upright vertical position in such caps must be cost effective, simple in design, small in size, light in weight and easy to clean, therefore it is a main objective of the present invention to provide a non-rotating wheel cap that is distinguished by these advantageous features.

To achieve the objective of the present invention, all the components of the non-rotating wheel cap disclosed in this invention are press-fitted to each other in order to avoid the usage of bolts and nuts; which would increase the weight of such cap, and accordingly increases the force needed to maintain such cap in its upright position. Such cap is installed in its position at the center of a wheel rim using fixtures, thus, it is easy for the user himself to install and uninstall such cap, whenever he pleases. Narrow spaces are avoided in the cap of the present invention, since these spaces increase the difficulty of cleaning such cap. The decorations displayed on such cap are at the most apparent component on the outer side of such cap, with no transparent surfaces covering the decoration, since these surfaces are known for accumulating mist.

### BRIEF DESCRIPTION OF THE DRAWINGS

Further features and advantages of the present invention will become apparent from the following detailed description, taken in combination with the appended drawings, in which:
**FIG. 1** is a perspective view of a non-rotating wheel cap configured according to the preferred embodiment of the present invention.

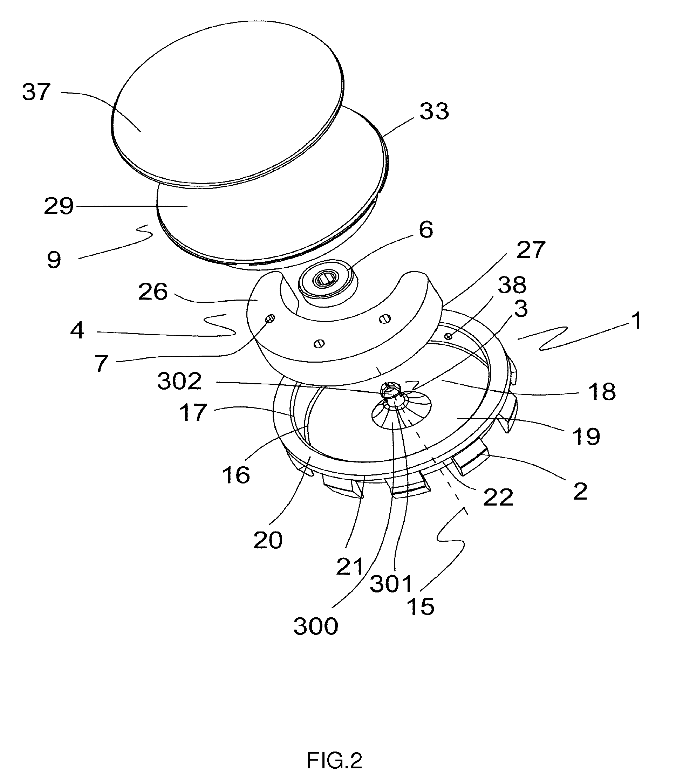

**FIG.2** is an exploded perspective view of a non-rotating wheel cap configured according to the preferred embodiment of the present invention.

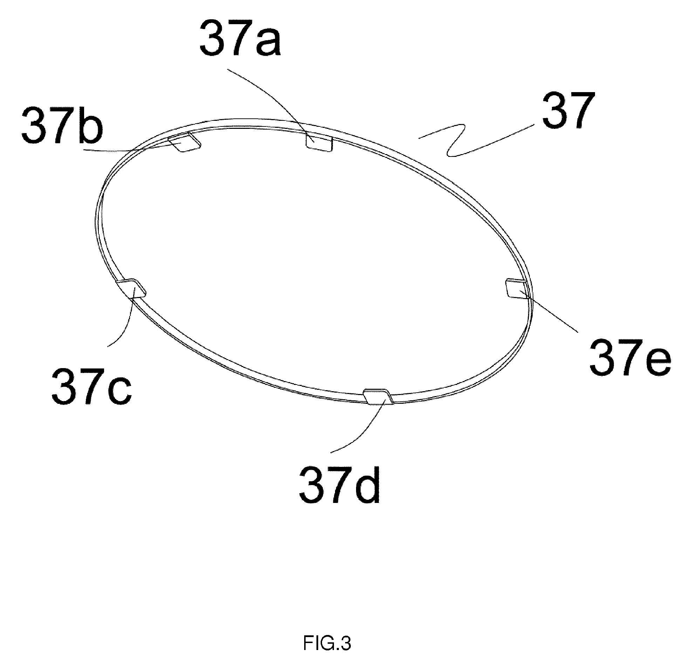

**FIG.3** is a rear perspective view of a concaved circular metal sheet of a non-rotating wheel cap configured according to the preferred embodiment of the present invention.

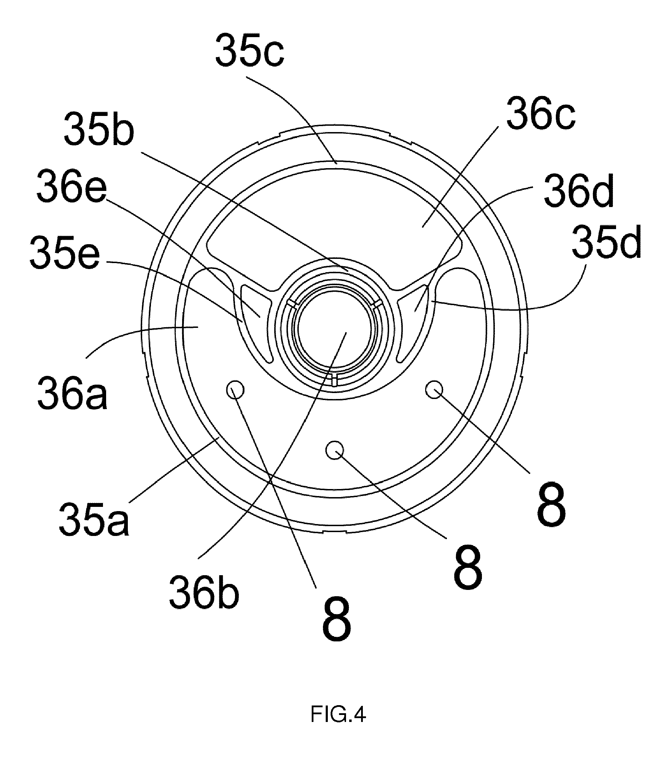

**FIG.4** is a top view of a cylindrical housing of a non-rotating wheel cap configured according to the preferred embodiment of the present invention.

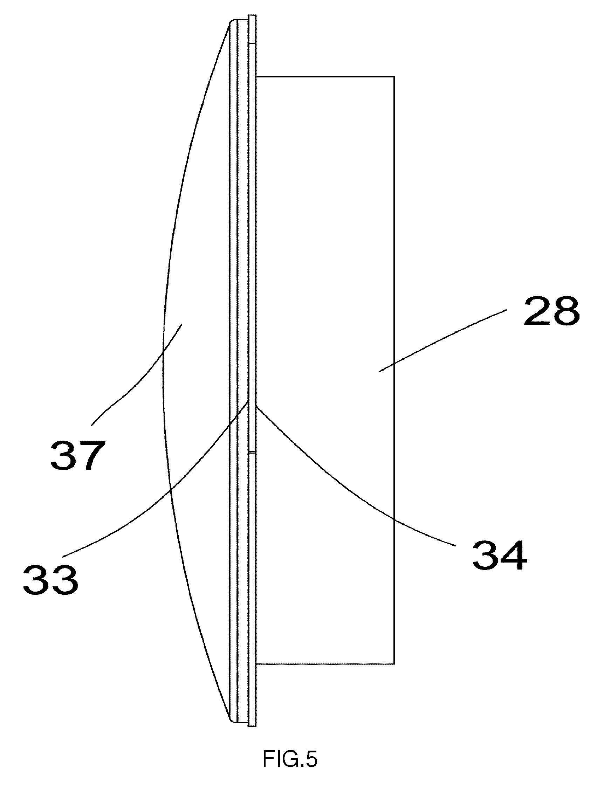

**FIG.5** is a side view of a cylindrical housing with an attached concaved circular metal sheet of a non-rotating wheel cap configured according to the preferred embodiment of the present invention.

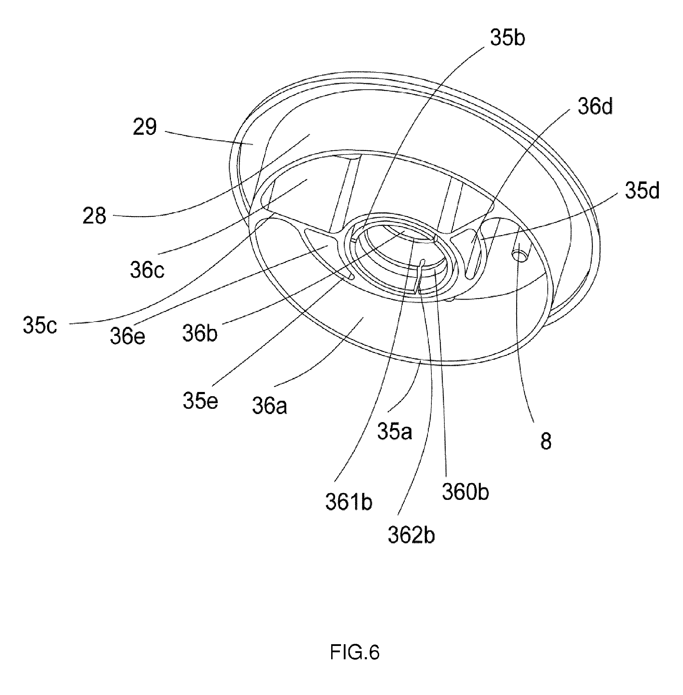

**FIG.6** is a perspective view of a cylindrical housing of a non-rotating wheel cap configured according to the preferred embodiment of the present invention.

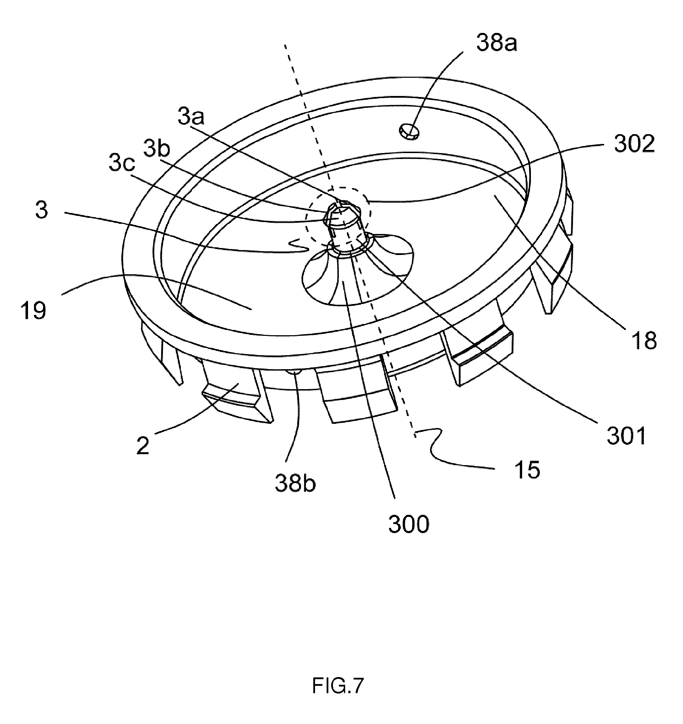

**FIG.7** is a perspective view of a cylindrical body of a non-rotating wheel cap configured according to the preferred embodiment of the present invention.

### DETAILED DESCRIPTION OF THE INVENTION

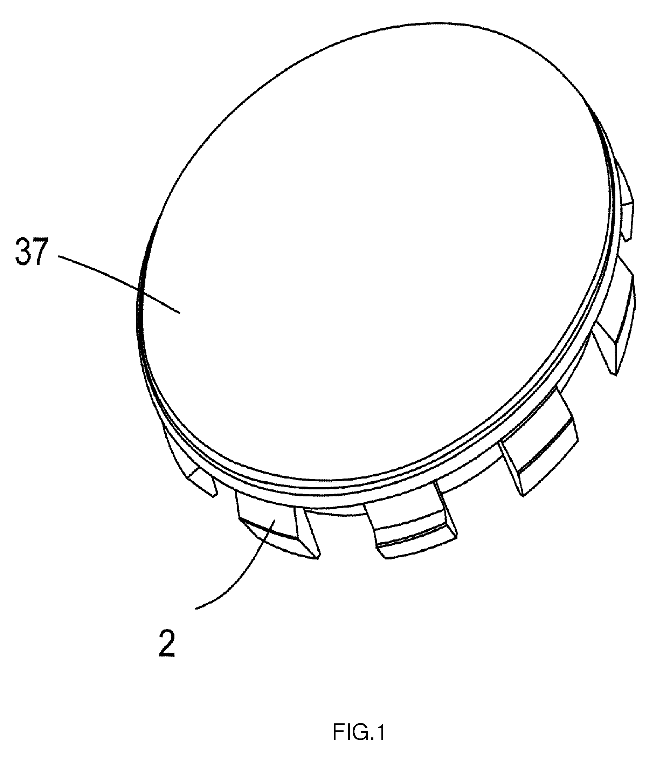

Fig. 1 illustrates a non-rotating wheel cap for displaying decorations configured according to a preferred embodiment of the present invention; wherein this embodiment comprises a cylindrical body 1 having a central axis 15, a lower body edge 16 and an upper body edge 17, the cylindrical body comprising an opening 18 at the upper body edge 17, a bottom wall 19 at the lower body edge 16, and inner body space between said bottom wall 19 and said opening 18, a pin 3 extending vertically from the bottom wall 19 along the central axis 15 outwardly toward the opening 18, a lip 20 extending from the upper body edge 17 radially outwardly from the central axis 15 and having an upper lip portion 21 and a lower lip portion 22, and mounting members 2 located at said lower lip portion 22 adapted to removably mount said cylindrical body 1 on said vehicle's wheel rim; a roller bearing 6, said shaft being adapted to be press-fitted inside said roller bearing; a curved body having substantially the shape of a crescent 4 having an upper and a lower lateral surfaces 26 and 27, wherein the upper surface 26 is concaved while the lower surface 27 is flat. Said body 4 has a plurality of holes 7 extending throughout the upper and lower lateral surfaces 26 and 27 of the body; a cylindrical housing 9 having a cylindrical wall 28 and a concaved base 29 with an upper surface 33 and a lower surface 34 , wherein the radius of said cylindrical wall 28 is smaller than the radius of said concaved base 29, thus rendering the base 29 to be extended radially outwardly from said cylindrical wall 29. Said cylindrical wall 28 has a plurality of partitions 35a, 35b, 35c, 35d that define a plurality of housing spaces 36a, 36b for said crescent shaped body 4, said roller bearing 6 respectively, and a plurality of empty spaces 36c, 36d, 36e. The housing space for said crescent-shaped body 36a comprises cylindrical members 8 extending vertically downwardly from the lower base surface 34, said cylindrical members 8 being adapted to be press-fitted inside said cylindrical holes 7 at the upper lateral surface 26 of the semi-circular body 4. The curvature of said base 29 is adapted to allow said upper surface 26 of said body 4 to be always in contact with the lower surface 34 of said base 29. The preferred embodiment also comprises a concaved circular metal sheet 37 having a plurality of protrusions 37a, 37b, 37c, 37d, 37e distributed at the circumference of such sheet 37 to enable the attachment of such metal sheet 37 onto the upper base surface 33 of the housing 2. The housing space of the roller bearing 36b is cylindrical and has two radially inwardly protrusions; an upper protrusion 360b and a lower protrusion 361 b, wherein such protrusions restrict the linear displacement of the roller bearing 6 with respect to its housing 36b. The roller bearing housing has a plurality of notches 362b distributed radially along the upper protrusion 360b, wherein such notches 362b extend toward the lower protrusion 361 b of the roller bearing housing 36b.

Preferably, the bottom wall 19 is inclined upwards toward the pin 3.

Preferably, said pin 3 comprises a curved base 300, a cervix 301 and a head 302 with the head and cervix forming a mushroom-shape such that the radius of the cervix 301 at the point of connection to the head 302 is greater than the radius of the remaining portions of the cervix 301. Said head 302 and part of the cervix 301 are divided into three symmetrical parts 3a, 3b, 3c.

Preferably, said cylindrical body has a plurality of holes 38 distributed radially at the distance between the upper and lower body edges 16,17.

The inclination of said bottom base 19, the curvature of the pin base 300, and the holes 38 allows for better centrifugation force to clean the device of the present invention.

Preferably, each of the supporting members 2 of the cylindrical body 1 has supporting member 200 connected to said lower lip portion 22.

Preferably, desired decorations are printed on the concaved circula metal sheet 37..

The cylindrical body 1 and the cylindrical housing 9 are made out of plastic, and the crescent-shaped object 4 is made out of metal. Preferably, the cylindrical holes 7 are three holes. Preferably, the cylindrical housing 9 is adapted to cover the opening 18 of the cylindrical body 1. Preferably, the roller bearing 6 and the crescent-shaped object 4 are adapted to be enclosed inside the inner body space between the opening 1 and the bottom wall 19.

From the discussed features of the preferred embodiment of the present invention, it is clearly noticed that the cylindrical body 1 can be manufactured based on the central space of a wheel rim, thus, and due to the compact design of the non-rotating wheel cap disclosed in present invention and since these designs enfold the mechanisms needed to keep the upright position of the cap inside the inner space of the cylindrical body 1, the cap can be simply inserted in the inner space of any wheel rim with no need to any modifications, in a manner similar to any regular wheel cap.

Excluding the roller bearing 6, the crescent shaped object 4 and concaved circular metal sheet 37; which are made out of metal, all the components of the cap are made of plastic, in order to reduce weight; wherein such reduction in weight enables the single roller bearing 6 to efficiently hold the cap in its upright position.

The non-rotating wheel cap of the present invention has also been tested at a machine that rotates the wheel of a vehicle in order to simulate the actual motion of vehicles. Going at a simulated speed that exceeds 400 km/hr, the non-rotating wheel cap disclosed in the present invention kept at an upright position during the whole period of the test.

Although the above description of the present invention has disclosed the features of the invention as applied to the preferred embodiment; additions, omissions and modifications applied to the details of the embodiment illustrated may be made by those skilled in the art without departing from the essential characteristic of the present invention.

## Claims

1. A non-rotating wheel cap device for displaying decorations at the center of a vehicle's wheel rim, the device comprising:
a cylindrical body 1 having a central axis 15, a lower body edge 16 and an upper body edge 17, the cylindrical body comprising an opening 18 at the upper body edge 17, a bottom wall 19 at the lower body edge 16, and inner body space between said bottom wall 19 and said opening 18, a pin 3 extending vertically from the bottom wall 19 along the central axis 15 outwardly toward the opening 18, a lip 20 extending from the upper body edge 17 radially outwardly from the central axis 15 and having an upper lip portion 21 and a lower lip portion 22, and mounting members with supporting means located at said lower lip portion adapted to removably mount said cylindrical body 1 on said vehicle's wheel rim;
a roller bearing 6, said pin being adapted to be press-fitted inside said roller bearing;
a curved body 4having substantially the shape of a crescent, the curved body comprising an upper 26 and a lower 27 lateral surfaces having cylindrical holes 7 at said upper lateral surface; the upper surface being concaved and the lower surface being flat;
a cylindrical housing 9 having a cylindrical wall 28 and a concaved base 29 with an upper surface 33 and a lower surface 34, the radius of the cylindrical wall 28 is smaller than the radius of the concaved base 29; rendering the base to be extended radially outwardly from the cylindrical wall 28, the cylindrical wall has a plurality of partitions that define a plurality of housing spaces 36a, 36b for the crescent shaped body 4, the roller bearing 6 respectively, and a plurality of empty spaces 36c, 36d, 36e, with the housing space 36a for said crescent-shaped body comprising cylindrical members 8 extending vertically downwardly from the lower base surface, such cylindrical members are adapted to be press-fitted inside the cylindrical holes at the upper lateral surface of the curved body 4, the curvature of the base is adapted to allow the upper surface 26 of the curved body to be always in contact with the lower surface of the base 29;
a concaved circular metal sheet 37 having a plurality of protrusions 37a, 37b, 37c, 37d, 37e distributed at the circumference of such sheet 37 to enable the attachment of such metal sheet onto the upper base surface 33 of said cylindrical housing base.

2. The non-rotating wheel cap device as claimed in claim 1, wherein said pin comprises a curved base, a cervix 301 and a head 302 with the head and cervix forming a mushroom-shape such that the radius of the cervix at the point of connection to the head is greater than the radius of the remaining portions of the cervix, the head and part of the cervix are being divided into three symmetrical parts.

3. The non-rotating wheel cap device as claimed in claim 1, wherein said roller bearing housing of said cylindrical housing comprises two radially inwardly protrusions; an upper protrusion and a lower protrusion, and wherein such protrusions restrict the linear displacement of said roller bearing with respect to its housing, the roller bearing housing further comprises a plurality of notches distributed radially along the upper protrusion, such notches extend toward the lower protrusion of said roller bearing housing.

4. The non-rotating wheel cap device as claimed in claim 1, wherein decorations to be displayed are printed on said concaved circular metal sheet.

5. The non-rotating wheel cap device as claimed in claim 1, wherein the cylindrical body and the cylindrical housing are made out of plastic.

6. The non-rotating wheel cap as claimed in claim 1, wherein the curved body is made out of metal.

7. The non-rotating wheel cap device as claimed in claim 1; wherein said cylindrical holes are three holes.

8. The non-rotating wheel cap as claimed in claim 1, wherein the cylindrical housing is adapted to cover the opening of the cylindrical body.

9. The non-rotating wheel cap as claimed in claim 1, wherein the roller bearing and the curved body are adapted to be enclosed inside the inner body space.
